# FASCICULE DE BREVET EUROPEEN

(11) **EP 2 993 962 B1**
(45) Date de publication et mention de la délivrance du brevet: **22.03.2023**
(21) Numéro de dépôt: 15182799.5
(22) Date de dépôt: 27.08.2015
(51) Int. Cl.: H05B 45/10, H05B 45/39, H05B 47/105, H05B 45/375, H05B 47/13, H05B 47/11

(54) **DISPOSITIF DE TRANSMISSION D'UN SIGNAL ÉLECTRIQUE DE PARAMÉTRAGE À UN ORGANE DE PILOTAGE D'UN MODULE D'ÉCLAIRAGE À DIODES ÉLECTROLUMINESCENTES, SYSTÈME D'ALIMENTATION, ENSEMBLE D'ÉCLAIRAGE ET PROCÉDÉ DE TRANSMISSION ASSOCIÉS**
VORRICHTUNG ZUR ÜBERTRAGUNG EINES ELEKTRISCHEN SIGNALS ZUR PARAMETRISIERUNG EINES ÜBERWACHUNGSORGANS EINES BELEUCHTUNGSMODULS MIT ELEKTROLUMINESZENZDIODEN, ENTSPRECHENDES STROMVERSORGUNGSSYSTEM, ENTSPRECHENDE BELEUCHTUNGSANORDUNG UND ENTSPRECHENDES ÜBERTRAGUNGSVERFAHREN
DEVICE FOR TRANSMITTING AN ELECTRIC PARAMETRISATION SIGNAL TO A CONTROL DEVICE OF AN LED LIGHTING MODULE, ASSOCIATED POWER SUPPLY SYSTEM, LIGHTING ASSEMBLY AND TRANSMISSION METHOD

(30) Priorité: 08.09.2014 FR 1458409
(43) Date de publication de la demande: 09.03.2016
(73) Titulaire: Schneider Electric Industries SAS, 92500 Rueil-Malmaison (FR)
(72) Inventeur: LOVATO, Jean-Louis, 38050 GRENOBLE Cedex 09 (FR); PERSEGOL, Dominique, 38050 GRENOBLE Cedex 09 (FR); DENTELLA, Alain, 38050 GRENOBLE Cedex 09 (FR)
(74) Mandataire: Lavoix

(56) Documents cités:
- EP-A2- 0 858 174
- EP-A2- 1 244 334
- WO-A2-2014/094016
- US-A1- 2009 195 063

## Description

La présente invention concerne un dispositif de transmission d'un signal électrique de paramétrage à un organe de pilotage d'un module d'éclairage à diodes électroluminescentes et un système d'alimentation d'un ou plusieurs modules d'éclairage à diodes électroluminescentes comprenant un ou de tels dispositifs de transmission et un ou de tels organes de pilotage.

La présente invention concerne également un ensemble d'éclairage à diodes électroluminescentes comportant un ou de tels modules d'éclairage et un tel système d'alimentation, ainsi qu'un procédé de transmission d'un tel signal de paramétrage à un tel organe de pilotage.

Le ou chaque module d'éclairage comprend au moins une diode électroluminescente et est propre à être polarisé selon une polarité directe ou selon une polarité inverse, suivant notamment son sens de branchement au système d'alimentation. La ou les diodes électroluminescentes sont polarisées en direct pour la polarité directe du module d'éclairage, et respectivement en inverse pour la polarité inverse du module d'éclairage.

Dans le domaine de l'alimentation de modules d'éclairage à diodes électroluminescentes, il est connu d'utiliser des systèmes d'alimentation qui permettent de regrouper dans un même boîtier plusieurs liaisons électriques d'alimentation d'une pluralité de modules d'éclairage. L'alimentation des modules d'éclairage est ainsi centralisée. De plus, de tels systèmes comprennent des organes de pilotage des modules d'éclairage, adaptés pour piloter les modules d'éclairage et la puissance qui leur est délivrée en fonction de grandeurs, telles que la luminosité, relatives à un environnement dans lequel se situent les modules d'éclairage et mesurées par des capteurs.

Cependant, dans les systèmes connus, les capteurs sont intégrés dans les modules d'éclairage et les systèmes d'alimentation ont une architecture particulière dépendant des modules d'éclairage auxquels ils sont destinés à être connectés. Ainsi, de tels systèmes d'alimentation sont complexes, comprennent des entrées adaptées pour être connectées seulement à certains capteurs et sont difficiles à mettre en oeuvre.

En outre, il est connu du document US2012/0187845 A1 un système d'alimentation de plusieurs modules d'éclairage à diodes électroluminescentes comprenant une unité de traitement, propre à recevoir des données concernant l'environnement dans lequel se trouvent les modules d'éclairage et à transmettre ces données à un organe de pilotage via une liaison électrique spécifique. L'organe de pilotage est alors propre à commander la puissance électrique délivrée aux modules d'éclairage en fonction de ces données.

Cependant, un tel système est peu efficace d'un point de vue énergétique, et l'établissement des connexions entre l'organe de pilotage, l'unité de traitement et les modules d'éclairage est complexe à réaliser dans un tel système. De plus, la transmission desdites données à l'organe de pilotage reste complexe à mettre en oeuvre.

Il est également connu du document EP 1 244 3344 A2 un système d'alimentation d'un module d'éclairage présentant les mêmes inconvénients que ceux précités et du document EP 0 858 174 A2 un système de communication entre différentes stations non-adapté à l'établissement de connexions entre des modules d'éclairage et leurs organes de pilotage.

Le but de l'invention est donc de proposer un dispositif de transmission d'un signal électrique de paramétrage à un organe de pilotage d'un module d'éclairage à diodes électroluminescentes permettant de simplifier la transmission du signal de paramétrage à l'organe de pilotage, ainsi que l'architecture des liaisons électriques entre l'organe de pilotage et le dispositif de transmission.

A cet effet, l'invention a pour objet un système selon la revendication 1.

Grâce à l'invention, la transmission du signal de paramétrage à l'organe de pilotage est simplifiée et améliorée, puisque le signal de paramétrage est transmis lorsque les moyens de changement de polarité commandent le passage du module d'éclairage en polarité inverse. En outre, l'architecture des liaisons électriques entre l'organe de pilotage et le dispositif de transmission est également simplifiée, puisque le dispositif de transmission est destiné à être connecté à une liaison électrique filaire, avantageusement composée d'une seule paire filaire, entre l'organe de pilotage et le module d'éclairage.

Selon d'autres aspects avantageux de l'invention, le système comprend une ou plusieurs des caractéristiques optionnelles des revendications 2 à 11.

L'invention a également pour objet un ensemble d'éclairage à diodes électroluminescentes selon la revendication 12.

L'invention sera mieux comprise et d'autres avantages de celle-ci apparaîtront à la lumière de la description qui va suivre, donnée uniquement à titre d'exemple non limitatif, et faite en se référant aux dessins sur lesquels :
- la figure 1 est une représentation schématique d'un ensemble d'éclairage à diodes électroluminescentes suivant un premier mode de réalisation de l'invention , l'ensemble comportant un premier, un deuxième et un troisième modules d'éclairage à diodes électroluminescentes, et un système d'alimentation des modules d'éclairage ;
- la figure 2 est une représentation schématique de la zone encadrée Il de la figure 1 ;
- la figure 3 est un organigramme d'un procédé de transmission d'un signal électrique de paramétrage à un organe de pilotage des modules d'éclairage de la figure 1 selon le premier mode de réalisation de l'invention ;
- la figure 4 est une vue analogue à celle de la figure 2 selon un deuxième mode de réalisation de l'invention ;
- la figure 5 est un organigramme analogue à celui de la figure 3 selon le deuxième mode de réalisation de l'invention ; et
- la figure 6 est une représentation analogue à celle de la figure 1, selon un troisième mode de réalisation de l'invention.

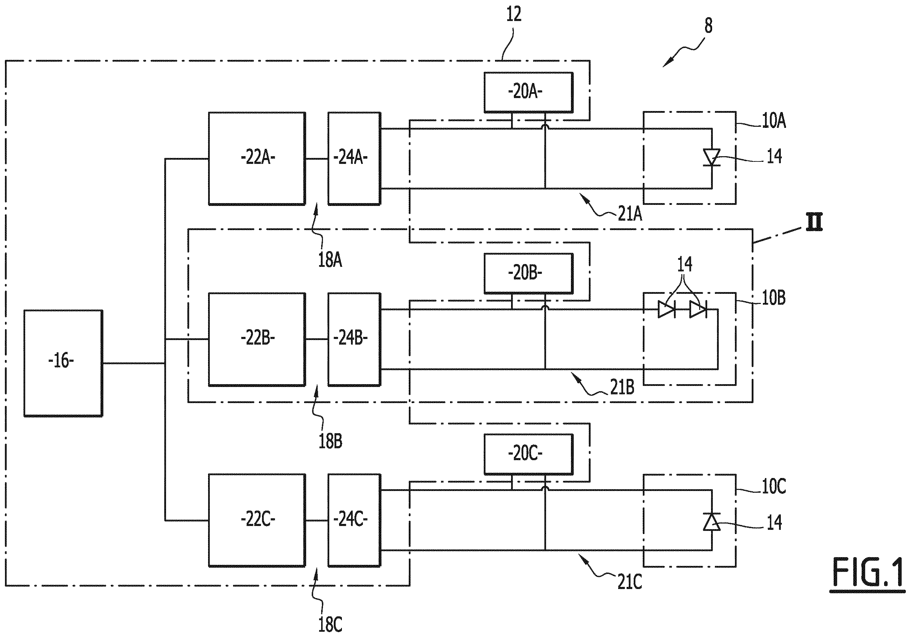

Un ensemble 8 d'éclairage à diodes électroluminescentes, présenté à la figure 1, comprend un premier 10A, un deuxième 10B et un troisième 10C modules d'éclairage à diodes électroluminescentes, ainsi qu'un système 12 d'alimentation des modules d'éclairage 10A, 10B et 10C.

Les modules d'éclairage 10A, 10B, 10C comprennent chacun une ou plusieurs diodes électroluminescentes 14 propres à être polarisées selon une polarité directe ou selon une polarité inverse. Chaque module d'éclairage 10A, 10B, 10C est dans une polarité directe lorsque la ou les diodes électroluminescentes 14 qui lui sont associées sont polarisées en direct, respectivement dans une polarité inverse lorsque la ou les diodes électroluminescentes 14 qui lui sont associées sont polarisées en inverse.

Le système d'alimentation 12 comprend une source d'alimentation électrique 16 reliée électriquement à des organes 18A, 18B, 18C de pilotage respectif des modules d'éclairage 10A, 10B, 10C.

Le système d'alimentation 12 comprend également, pour chaque module d'éclairage 10A, 10B, 10C, un dispositif 20A, 20B, 20C de transmission d'un signal électrique de paramétrage S1à l'organe de pilotage 18A, 18B, 18C associé.

La source d'alimentation électrique 16 est propre à alimenter chaque organe de pilotage 18A, 18B, 18C. La source d'alimentation 16 est par exemple une source de tension. En variante, la source d'alimentation 16 est une source de courant

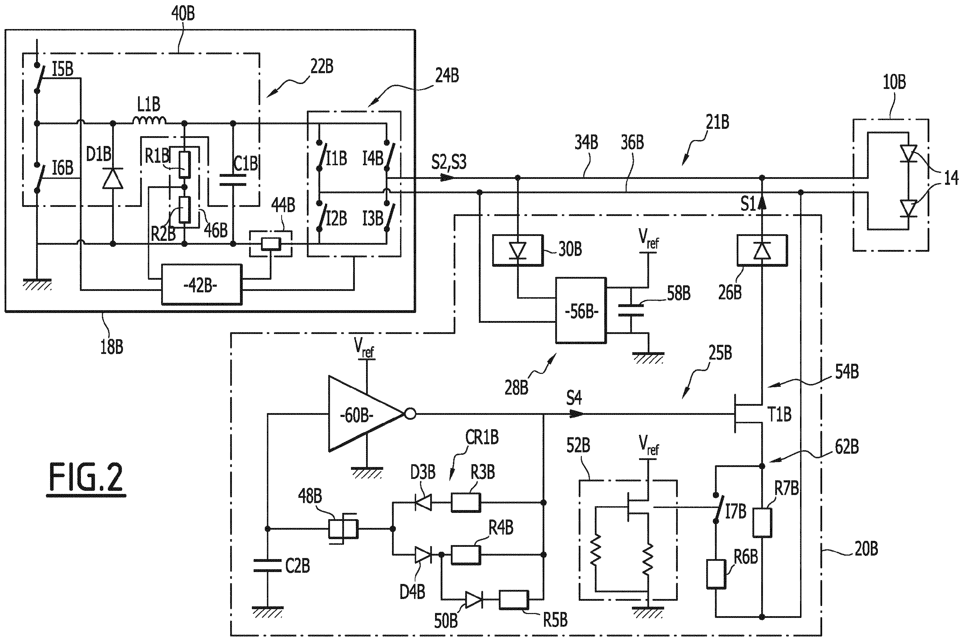

Comme présenté aux figures 1 et 2, chaque organe de pilotage 18A, 18B, 18C comprend une unité de traitement électronique 22A, 22B, 22C et des moyens 24A, 24B, 24C de changement de la polarité du module d'éclairage 10A, 10B, 10C associé audit organe de pilotage. Chaque organe de pilotage 18A, 18B, 18C est propre à être relié au module d'éclairage 10A, 10B, 10C correspondant via une liaison électrique filaire respective 21A, 21B, 21C.

Chaque dispositif de transmission 20A, 20B, 20C est adapté pour être relié à l'organe de pilotage 18A, 18B, 18C associé via la liaison électrique 21A, 21B, 21C correspondante. Plus précisément, chaque dispositif de transmission 20A, 20B, 20C est connecté à la liaison électrique 21A, 21B, 21C correspondante en parallèle du module d'éclairage 10A, 10B, 10C correspondant.

A la figure 2, seul l'organe de pilotage 18B et le dispositif de transmission 20B associés au deuxième module d'éclairage 10B sont représentés. Dans la suite de la description, on s'attachera à décrire l'organe de pilotage 18B, le dispositif de transmission 20B et la liaison électrique 21B associés au deuxième module d'éclairage 10B, sachant que cette description s'applique également aux autres organes de pilotage 18A, 18C, dispositifs de transmission 20A, 20C et liaisons électriques 21A, 21C qui sont respectivement associés au premier 10A et troisième 10C modules d'éclairage.

Le dispositif de transmission 20B comprend, comme présenté à la figure 2, des moyens 25B de transmission du signal de paramétrage S1 à l'organe de pilotage 18B, ainsi qu'un premier commutateur 26B propre à commuter, c'est-à-dire à varier, entre une position ouverte dans laquelle les moyens de transmission 25B et la liaison électrique 21B sont isolés électriquement l'un de l'autre, et une position fermée dans laquelle les moyens de transmission 25B et la liaison électrique 21B sont reliés électriquement.

Le dispositif de transmission 20B comprend, en outre, un organe 28B de stockage d'énergie électrique et un deuxième commutateur 30B propre à commuter entre une position fermée, dans laquelle l'organe de stockage d'énergie est relié électriquement à la liaison électrique 21B et stocke au moins une partie de l'énergie électrique transmise sur la liaison électrique 21B, et une position ouverte dans laquelle l'organe de stockage d'énergie 28B est isolé électriquement de la liaison électrique 21B.

Dans ce mode de réalisation particulier, les commutateurs 26B et 30B sont représentés par des diodes adaptées pour commuter automatiquement en fonction de la polarité de tension ou de courant, c'est-à-dire en fonction de la tension qui leur est appliquée ou du courant les traversant.

La liaison électrique 21B comprend un premier conducteur 34B et un deuxième conducteur 36B adaptés pour alimenter électriquement le module d'éclairage 10B. La liaison électrique 21B est de préférence constituée des premier 34B et deuxième 36B conducteurs électriques. Elle comporte alors seulement deux conducteurs électriques 34B, 36B.

L'unité de traitement 22B comprend un bloc électronique 40B de pilotage d'une puissance électrique délivrée sur la liaison électrique 21B, et un bloc 42B de commande du bloc de pilotage 40B. L'unité de traitement 22B comprend également un organe 44B de mesure de l'intensité d'un courant circulant sur la liaison électrique 21B et un organe 46B de mesure de la tension de la liaison électrique 21B, associés au bloc de commande 42B.

Les moyens de changement de polarité 24B sont adaptés pour être commandés par le bloc de commande 42B et pour modifier la polarité du module d'éclairage 10B. Plus précisément, les moyens de changement 24B sont propres à générer, d'une part un signal S2 de commande du passage du module d'éclairage 10B en polarité inverse et, d'autre part, un signal S3 de commande du passage du module d'éclairage 10B en polarité directe.

Les moyens de changement 24B sont adaptés pour commander le module d'éclairage 10B en polarité inverse, via le signal de commande en polarité inverse S2, pendant une durée maximale prédéterminée de valeur par exemple inférieure à 100 ms, de préférence inférieure à 10ms. En outre, les moyens de changement 24B sont propres à commander le module d'éclairage 10B en polarité inverse avec une périodicité prédéterminée, la période entre deux commandes étant par exemple égale à 3 secondes.

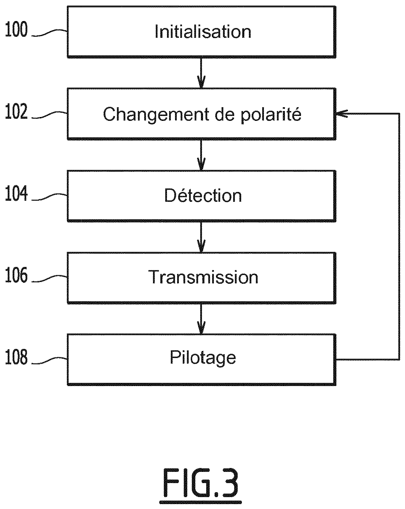

Les moyens de changement 24B comprennent suivant leur position ouverte ou fermée quatre interrupteurs commandables I1B, I2B, I3B, I4B propres suivant leur position ouverte ou fermée à modifier le sens du courant traversant le module d'éclairage 10B. Les moyens de changement 24B sont par exemple tels que présentés à la figure 3 et décrits au paragraphe [0025] de la demande de brevet EP2464198 A1.

Par conséquent, suite à la commande du module d'éclairage 10B vers sa polarité inverse pendant la durée maximale, les moyens de changement 24B sont propres à commander le module d'éclairage 10B en polarité directe, via le signal de commande en polarité directe S3.

Les moyens de transmission 25B du signal de paramétrage S1 à l'organe de pilotage 18B comprennent un capteur de température 48B, un capteur de luminosité 50B et un capteur de présence 52B, associés à des moyens électriques 54B de traitement de données issues des capteurs de température 48B, de luminosité 50B et de présence 52B. Les moyens de transmission 25B sont propres à transmettre un courant sur la liaison électrique lorsque le premier commutateur 26B est en position fermée. Le courant transmis correspond au signal de paramétrage S1.

Le premier commutateur 26B correspond à des moyens de détection du signal de commande en polarité inverse S2 et du signal de commande en polarité directe S3. Le premier commutateur 26B est en forme d'une diode de polarité opposée à celle du module d'éclairage 10B et qui est connectée entre le premier conducteur 34B et les moyens électriques de traitement 54B. La diode 26B a sa cathode connectée au premier conducteur 34B et son anode connectée aux moyens électriques de traitement 54B, tandis que les diodes 14 du module d'éclairage 10B sont équivalentes à une diode globale dont l'anode est connectée au premier conducteur 34B et la cathode au deuxième conducteur 36B.

Le premier commutateur 26B est configuré pour commuter vers sa position fermée suite à la détection du signal de commande en polarité inverse S2, c'est-à-dire lorsqu'il détecte le signal de commande en polarité inverse S2. De même, le premier commutateur 26B est configuré pour commuter vers sa position ouverte suite à la détection du signal de commande en polarité directe S3.

L'organe de stockage 28B est connecté entre les deux conducteurs 34B, 36B et comprend un dispositif de charge 56B associé à un condensateur 58B de stockage d'énergie électrique. Plus précisément, le dispositif de charge 56B est connecté aux deux conducteurs 34B, 36B.

Le deuxième commutateur 30B est connecté entre le dispositif de charge 56B et le premier conducteur 34B. Le deuxième commutateur 30B est en forme d'une diode de même polarité que celle du module d'éclairage 10B et qui est connectée entre le premier conducteur 34B et le dispositif de charge 56B. Le deuxième commutateur 30B correspond également à des moyens de détection du signal de commande en polarité inverse S2 et du signal de commande en polarité directe S3. La diode 30B a sa cathode connectée au dispositif de charge 56B et son anode connectée au premier conducteur 34B.

Le deuxième commutateur 30B est configuré pour commuter vers sa position ouverte, suite à la détection du signal de commande en polarité inverse S2 et vers sa position fermée suite à la détection du signal de commande en polarité directe S3.

Les premier 34B et deuxième 36B conducteurs, c'est-à-dire, la liaison électrique 21B, sont adaptés pour transmettre à la fois le signal de commande en polarité inverse S2, le signal de commande en polarité directe S3 et le signal de paramétrage S1.

Le bloc électronique de pilotage 40B forme un hacheur série, également appelé convertisseur Buck. Le bloc électronique de pilotage 40B est propre à délivrer la puissance électrique en provenance de la source d'alimentation 16 sur la liaison électrique 21B, la puissance électrique délivrée étant commandée par le bloc de commande 42B.

Le bloc électronique de pilotage 40B comprend, comme présenté à la figure 2, deux interrupteurs commandables I5B, I6B de commande du courant et de la tension délivrée sur la liaison électrique 21B, une diode D1B de protection contre des surtensions, une bobine L1B propre à alimenter en courant le module d'éclairage 10B et un condensateur C1B.

Le bloc de commande 42B est propre à commander la puissance électrique délivrée sur la liaison électrique 21B, notamment via les interrupteurs commandables I5B, I6B. Le bloc de commande 42B est propre à être relié aux organes de mesure du courant 44B et de la tension 46B, afin d'acquérir les valeurs de courant et de tension mesurées, et de commander le bloc de pilotage 40B et donc le module d'éclairage 10B en fonction des valeurs de courant et de tension mesurées.

Le bloc de commande 42B est également adapté pour commander le bloc de pilotage 40B en fonction du signal de paramétrage S1, c'est-à-dire du courant transmis par les moyens de transmission 25B et mesuré par l'organe de mesure du courant 44B. Ainsi, le bloc de commande 42B, et donc l'organe de pilotage 18B, sont adaptés pour commander et/ou piloter la puissance électrique délivrée au module d'éclairage 10B via la liaison électrique 21B, en fonction de l'amplitude et/ou de la forme du signal de paramétrage S1 transmis.

Avantageusement, le bloc de commande 42B est apte à commander les moyens de changement 24B pour commander le module d'éclairage 10B en polarité directe ou inverse, et ainsi à commander la transmission du signal de paramétrage S1 en commandant le module d'éclairage 10B en polarité inverse.

L'organe de mesure du courant 44B comporte, par exemple, un shunt. En variante, l'organe de mesure du courant 44B comporte un capteur de courant à effet Hall.

L'organe de mesure de la tension 46B comprend, par exemple, deux résistances R1B, R2B entre lesquelles le bloc de commande 42B vient lire une tension.

Le capteur de température 48B comprend une thermistance de type CTN (coefficient de température négative) dont la valeur de la résistance électrique varie en fonction de la température.

Le capteur de luminosité 50B comprend une photodiode 50B adaptée pour détecter un rayonnement optique et le transformer en signal électrique de mesure, et plus précisément en un courant.

Le capteur de présence 52B comprend un capteur de type PIR (*de l'anglais Passive InfraRed*)*.* Le capteur de présence 52B est adapté pour capter le rayonnement infrarouge émis notamment par un être humain et à le convertir en un signal électrique de mesure adapté aux moyens électriques de traitement 54B.

Les moyens électriques de traitement 54B sont connectés entre, d'une part, le deuxième conducteur 36B, et d'autre part, le premier commutateur 26B qui est lui-même connecté au premier conducteur 34B. Ainsi, les moyens électriques de traitement 54B sont connectés entre les premier 34B et deuxième 36B conducteurs.

Les moyens électriques de traitement 54B sont adaptés pour transmettre le signal de paramétrage S1, lorsque le premier commutateur 26B est dans sa position fermée, c'est-à-dire lorsque le signal de commande en polarité inverse S2 est détecté. Les moyens électriques de traitement 54B sont adaptés pour générer le signal de paramétrage S1 en fonction de données mesurées par les capteurs de température 48B, de luminosité 50B et de présence 52B. Ainsi, les moyens électriques de traitement 54B sont propres à générer le signal de paramétrage S1 sous la forme d'un courant alternatif dont la fréquence varie en fonction de la valeur de la résistance électrique du capteur de température.

Le rapport cyclique du signal de paramétrage S1 varie en fonction du signal de mesure émis par le capteur de luminosité 50B et l'amplitude du signal de paramétrage S1 varie en fonction du signal de mesure émis par le capteur de présence 52B. Les moyens de transmission 25B sont donc adaptés pour générer, puis transmettre le signal de paramétrage S1 à l'organe de pilotage 18B, suite à la détection du signal de commande en polarité inverse.

Les moyens électriques de traitement 54B comprennent un oscillateur 60B, par exemple, de type trigger de Schmidt, connecté en entrée à un condensateur C2B et en sortie à la grille d'un transistor à effet de champ T1B. De plus, les moyens électriques de traitement 54B comprennent une liaison de contre-réaction CR1B connectée entre une sortie de l'oscillateur 60B et une entrée de l'oscillateur 60B.

Les moyens électriques de traitement 54B comprennent également un premier bloc de traitement 62B, relié au capteur de présence 52B et adapté pour traiter le signal de mesure émis par le capteur de présence 52B.

Le dispositif de charge 56B est adapté pour récupérer une partie de l'énergie électrique transmise sur la liaison électrique 21B, lorsque le module d'éclairage 10B est dans sa polarité directe, c'est-à-dire lorsque le signal de commande en polarité directe est détecté.

Le condensateur 58B est adapté pour stocker l'énergie électrique récupérée par le dispositif de charge 56B et pour alimenter électriquement, avec une tension de référence Vref, les moyens de transmission 25B.

L'oscillateur 60B est apte à commander, via un signal de commande alternatif S4, le transistor T1B entre son état passant et son état bloquant, en fonction des données mesurées par les capteurs de température 48B et de luminosité 50B. L'oscillateur 60B est ainsi apte à faire varier le courant transmis sur la liaison électrique 21B par le dispositif de transmission 20B, c'est-à-dire le signal de paramétrage S1, lorsque le module d'éclairage 10B est dans sa polarité inverse. La variation du courant est comprise entre un état haut correspondant à l'état passant du transistor T1B et un état bas correspondant à l'état bloquant du transistor T1B. Plus précisément, l'oscillateur 60B est propre à faire varier la fréquence du signal de commande alternatif S4 et donc du signal de paramétrage S1, en fonction de la valeur de la résistance électrique de la thermistance 48B. En effet, lorsque la résistance de la thermistance 48B varie, alors une première résistance globale R1, vue par l'oscillateur 60B au niveau de son entrée et non représentée sur les figures, varie. Or, l'oscillateur 60B est adapté pour générer le signal de commande alternatif S4 avec une fréquence fonction de la première résistance globale R1, également appelée première résistance équivalente.

La liaison de contre-réaction CR1B comprend deux branches en parallèle l'une de l'autre, comprenant une résistance R3B et une diode D3B polarisée dans un sens et respectivement une résistance R4B et une diode D4B polarisée dans un autre sens. La liaison de contre-réaction CR1B est connectée entre, d'une part, la sortie de l'oscillateur 60B et, d'autre part, le capteur de température 48B qui est connecté en entrée de l'oscillateur 60B.

Le capteur de luminosité 50B est connecté en parallèle de la résistance R4B et en série avec une résistance R5B.

Le condensateur C2B est adapté pour se charger lorsque le capteur de luminosité 50B capte des rayonnements et génère un courant. Le condensateur C2B est ainsi propre à faire varier la tension en entrée de l'oscillateur 60B.

Le rapport cyclique du signal de commande alternatif S4, varie en fonction du signal de mesure émis par le capteur de luminosité 50B. En effet, le capteur de luminosité 50B, ainsi que la contre-réaction CR1B, sont adaptés pour, lorsque le capteur de luminosité 50B détecte un ou des rayonnements lumineux, augmenter l'intensité du courant circulant sur la liaison de contre-réaction CR1B vers le condensateur C2B. Ceci permet de modifier la tension en entrée de l'oscillateur 60B, et donc le rapport cyclique du signal de commande alternatif S4. Le capteur de luminosité 50B est donc apte à faire varier le rapport cyclique du signal de paramétrage S1, et alors du courant traversant le premier commutateur 26B et transmis vers l'organe de pilotage 18B, puisqu'il est apte à faire varier le rapport cyclique du signal de commande alternatif S4.

Le bloc de traitement 62B est connecté entre le transistor T1B et le deuxième conducteur 36B, et plus précisément entre le drain du transistor T1B et le deuxième conducteur 36B. Le bloc de traitement 62B comprend un interrupteur commandable I7B, piloté par le capteur de présence 52B. Le bloc de traitement 62B comprend également une résistance R6B, connectée en série avec l'interrupteur commandable I7B et une résistance R7B, connectée en parallèle de l'interrupteur commandable I7B et de la résistance R6B. Le bloc de traitement 62B est propre à faire varier l'amplitude du signal de paramétrage S1, en fonction du signal de mesure émis par le capteur de présence 52.

L'interrupteur commandable I7B est, par exemple, mobile entre une position ouverte dans laquelle un courant traverse la résistance R6B et une position fermée dans laquelle la résistance R6B est isolée électriquement de la résistance R7B. L'interrupteur I7B est alors en position fermée lorsque le capteur de présence 52B détecte une présence, et en position ouverte, lorsqu'aucune présence n'est détectée.

Suivant la position ouverte ou fermée de l'interrupteur I7B, une deuxième résistance globale R2du bloc de traitement 62B varie. La deuxième résistance R2 est non représentée sur les figures et est également appelée deuxième résistance équivalente. Lorsque l'interrupteur I7B est en position ouverte, la valeur de la deuxième résistance globale R2 est globalement égale à celle de la résistance R7B, et lorsque l'interrupteur I7B est en position fermée, la valeur de la deuxième résistance globale R2 est globalement égale à celle des résistances R7B et R6B mises en parallèle. Le courant et donc le signal de paramétrage S1 transmis par les moyens de transmission 25B sont ainsi, soit proportionnels à la valeur de la résistance R7B, soit proportionnels à la valeur des résistances R7B et R6B mises en parallèle, suivant le signal de mesure transmis par le capteur de présence 52. L'amplitude du signal de paramétrage S1 varie en fonction du signal de mesure transmis par le capteur de présence 52B.

Le dispositif de transmission 20B est donc adapté pour faire varier la valeur et/ou la forme du signal de paramétrage S1, c'est-à-dire du courant transmis sur la liaison électrique 21B, lorsque le module d'éclairage 20B est dans sa polarité inverse, en fonction des données mesurées par les capteurs de température 48B, de luminosité 50B et de présence 52B.

Avantageusement, la lecture de la tension transmise sur la liaison électrique 21B par l'organe de mesure de la tension 46B, permet d'identifier en fonction de l'amplitude du signal de paramétrage S1, si le capteur de présence 52B a détecté une présence ou non. En effet, l'amplitude du signal de paramétrage S1 dépend de la valeur de la tension appliquée sur la liaison électrique 21B.

Le fonctionnement du système d'alimentation 12 et des dispositifs de transmission 20A 20B, 20C va désormais être présenté à l'aide du procédé de transmission correspondant à l'organigramme de la figure 3. Dans la suite de la description, le procédé sera décrit seulement pour le deuxième module d'éclairage 10B et pour le dispositif de transmission 20B, l'organe de pilotage 18B et la liaison électrique 21B qui lui sont associés. Cette description s'applique également aux organes de pilotage 18A, 18C, dispositifs de transmission 20A, 20C et liaisons électriques 21A, 21C associés aux premier 10A, respectivement troisième 10C modules d'éclairage.

Lors d'une première étape d'initialisation 100, l'organe de pilotage 18B récupère la polarité du module d'éclairage 10B et/ou un identifiant du module d'éclairage 10B, et/ou des paramètres de configuration du module d'éclairage 10B, correspondant par exemple, à une tension nominale et/ou à un courant nominal de fonctionnement du module d'éclairage 10B, c'est-à-dire à un courant et à une tension correspondant à un fonctionnement optimal du module d'éclairage 10B.

Les paramètres de configuration, la polarité et/ou l'identifiant sont soit transmis à l'organe de pilotage 18B par un module de communication externe, non représenté, soit transmis via le module d'éclairage 10B et la liaison électrique 21B, soit découverts par l'organe de pilotage 18B à l'aide d'algorithmes prédéterminés.

Après l'étape d'initialisation 100, l'organe de pilotage 18B est adapté pour piloter le module d'éclairage 10B et notamment pour alimenter le module d'éclairage 10B lorsqu'un utilisateur le commande. L'organe de pilotage 18B transmet alors au module d'éclairage 10B, le signal de commande en polarité directe S3. L'organe de stockage d'énergie électrique 28B stocke alors une partie de l'énergie électrique transmise sur la liaison électrique 21B et destinée à alimenter le module d'éclairage 10B.

Puis, suite à l'étape d'initialisation 100, lors d'une étape de changement de polarité 102, les moyens de changement de polarité 24B génèrent le signal de commande en polarité inverse S2 et changent la polarité du module d'éclairage 10B pendant la durée maximale.

Ensuite, lors d'une étape de détection 104, le premier commutateur 26B détecte le signal de commande en polarité inverse S2, puisque sa polarité est opposée à celle du module d'éclairage 10B, et passe de sa position ouverte à sa position fermée. De même, le deuxième commutateur 30B détecte le signal de commande en polarité inverse S2, et passe de sa position fermée à sa position ouverte. L'organe de stockage d'énergie électrique 28B est alors isolé électriquement de la liaison électrique 21B et alimente électriquement le dispositif de transmission 20B.

Suite à la détection du signal de commande en polarité inverse S2 par les premier 26B et/ou deuxième 30B commutateurs, lors d'une étape de transmission 106, le dispositif de transmission 20B récupère les données mesurées par les capteurs de température 48B, de luminosité 50B et de présence 52B. Puis, les moyens électriques de traitement 54B génèrent le signal de paramétrage S1 et transmettent le signal de paramétrage S1 vers l'organe de pilotage 18B. Le signal de paramétrage S1 est modulé en fréquence, en amplitude et en rapport cyclique, en fonction respectivement des données mesurées par le capteur de température 48B, le capteur de présence 52B et le capteur de luminosité 50B.

Enfin, lors d'une étape de pilotage 108, suite à l'étape de transmission 106, l'organe de pilotage 18B et plus précisément les organes de mesure du courant 44B et de la tension 46B mesurent le courant et la tension sur la liaison électrique 21B. Le bloc de commande 42B, commande alors la puissance électrique délivrée sur la liaison électrique 21B, en fonction du signal de paramétrage S1 transmis et donc notamment en fonction du rapport cyclique, de la fréquence et de l'amplitude du courant mesuré par l'organe de mesure du courant 44B. L'organe de pilotage 18B pilote donc la puissance électrique délivré sur la liaison électrique 21B en fonction des données mesurées par les différents capteurs 48B, 50B, 52B.

L'étape de changement de polarité 102 est alors répétée suivant la période prédéterminée, de manière à transmettre régulièrement le signal de paramétrage S1 à l'organe de pilotage 20B et donc de manière à transmettre régulièrement les données mesurées par les capteurs 48B, 50B, 52B.

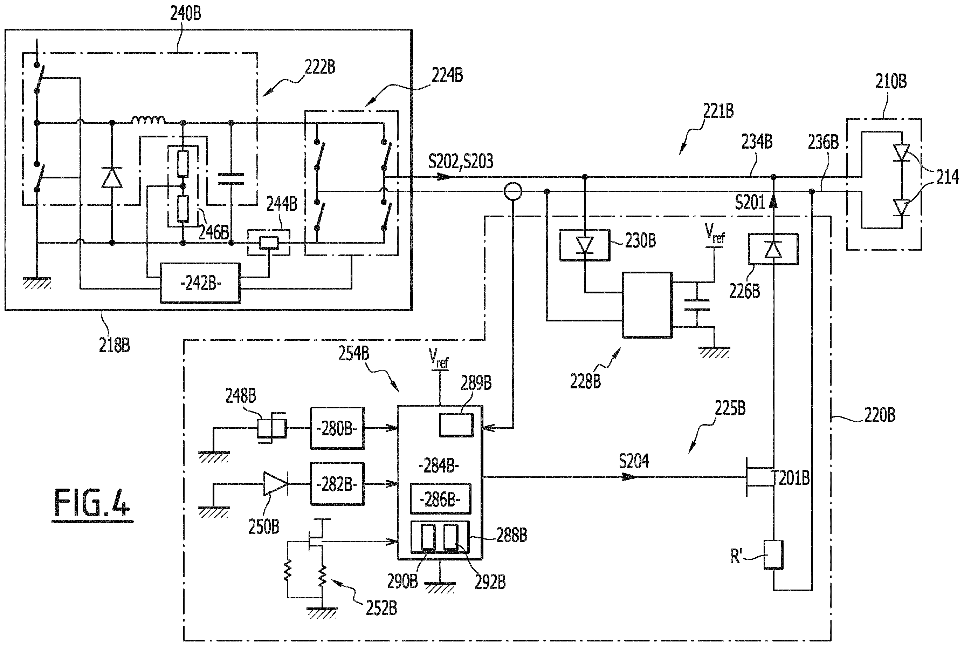

Dans un deuxième mode de réalisation de l'invention, présenté à la figure 4, les éléments similaires à ceux du premier mode de réalisation ne sont pas décrits à nouveau et portent les mêmes références augmentées de 200. Dans la suite de la description, uniquement les différences entre les premier et deuxième modes de réalisation seront décrites.

Le schéma de la figure 1 présentant un ensemble d'éclairage s'applique également au deuxième mode de réalisation, seuls les numéros de références sont à modifier.

Dans le deuxième mode de réalisation, l'organe de pilotage 218B est similaire à l'organe de pilotage présenté dans le premier mode de réalisation. Les différences entre le premier et le deuxième modes de réalisation concernent le dispositif de transmission.

Ainsi, à la figure 4, un dispositif de transmission 220B est adapté pour être relié à l'organe de pilotage 218B et au module d'éclairage 210B auxquels il est associé, via une liaison électrique 221B entre l'organe de pilotage 218B et le module d'éclairage 210B.

Le dispositif de transmission 220B comprend des moyens de transmission 225B d'un signal de paramétrage S201 à l'organe de pilotage 218B, ainsi qu'un premier commutateur 226B propre à commuter, c'est-à-dire à varier, entre une position ouverte dans laquelle les moyens de transmission 225B et la liaison électrique 221B sont isolés électriquement l'un de l'autre, et une position fermée, dans laquelle les moyens de transmission 225B et la liaison électrique 221B sont reliés électriquement l'un à l'autre.

Le dispositif de transmission 220B comprend également un organe 228B de stockage d'énergie électrique et un deuxième commutateur 230B propre à commuter entre une position fermé, dans laquelle l'organe de stockage d'énergie est relié électriquement à la liaison électrique 221B et stocke au moins une partie de l'énergie électrique transmise sur la liaison électrique 221B et une position ouverte, dans laquelle l'organe de stockage d'énergie 228B est isolé électriquement de la liaison électrique 221B.

Les moyens de transmission 225B du signal de paramétrage à l'organe de pilotage 218B comprennent un capteur de température 248B, un capteur de luminosité 250B et un capteur de présence 252B associés à des moyens électriques 254B de traitement de données fournies par les capteurs de température 248B, de luminosité 250B et de présence 252B.

Les moyens électriques de traitement 254B sont connectés entre, d'une part, le deuxième conducteur 236B et, d'autre part le premier commutateur 226B qui est lui-même connecté au premier conducteur 234B. Ainsi, les moyens électriques de traitement 254B sont connectés entre les premier 234B et deuxième 236B conducteurs.

Les moyens électriques de traitement 254B sont adaptés pour traiter des données et/ou des signaux de mesure émis par les capteurs de température 248B, luminosité 250B et présence 252B, pour générer le signal de paramétrage S201. Les moyens électriques de traitement 254B sont adaptés pour transmettre le signal de paramétrage S201 lorsque le premier commutateur 226B est dans sa position fermée et, plus précisément, lorsque le signal de commande en polarité inverse S202 est détecté.

Les moyens électriques de traitement 254B comprennent un premier amplificateur 280B associé au capteur de température 248B, un deuxième amplificateur 282B associé au capteur de luminosité 250B et une unité de traitement 284B à laquelle sont connectés les premier 280B et deuxième 282B amplificateurs, ainsi que le capteur de présence 252B.

Les moyens électriques de traitement 254B comprennent également un transistor à effet de champ T201B dont la grille est connectée à une sortie de l'unité de traitement 284B et dont la source et le drain sont connectés entre les premier 234B et deuxième 236B conducteurs. De plus, les moyens électriques de traitement 254B comprennent une résistance R' connectée entre le deuxième conducteur 236B et le drain du transistor T201B.

L'unité de traitement 284B est adaptée pour commander le transistor T201B dans son état passant ou dans son état bloquant via un signal S204 de commande numérique du transistor T201B. Plus précisément l'unité de traitement 284B est propre à générer le signal de commande numérique S204 du transistor T201B.

L'unité de traitement 284B comprend un processeur 286B, une mémoire 288B et un bloc 289B de mesure du courant circulant sur la liaison électrique 221B.

Le processeur 286B est adapté pour exécuter des logiciels compris dans la mémoire 288B. La mémoire 288B comprend un premier logiciel 290B de mémorisation d'un identifiant du module d'éclairage 210B et des paramètres de configuration du module d'éclairage 210B, ainsi qu'un logiciel 292B de génération du signal de commande numérique S204.

Le bloc de mesure du courant 289B est propre à détecter le signal de commande en polarité inverse S202 et le signal de commande en polarité directe S203. En effet lorsque le module d'éclairage 210B est polarisé en inverse, l'intensité du courant mesurée par le bloc de mesure 289B est nulle et le signal de commande en polarité inverse S202 est détecté, tandis que lorsque le module d'éclairage est polarisé en direct, l'intensité du courant mesurée est supérieure à un seuil de courant prédéterminé, et le signal de commande en polarité directe S203 est détecté. Le seuil du courant est par exemple égal à 40mA.

Le logiciel de génération 292B est adapté pour générer le signal de commande numérique S204 en fonction des données mesurées par les capteurs de température 248B, de luminosité 250B et de présence 252B, c'est-à-dire de signaux de mesure et/ou données transmis par les capteurs 248B, 250B, 252B à l'unité de traitement 284B. Le logiciel de génération 292B est également adapté pour générer le signal de commande numérique S204 en fonction de l'intensité du courant mesurée sur la liaison électrique 221B et de l'identifiant et des paramètres de configuration mémorisés par le logiciel de mémorisation 290B.

Le logiciel de génération 292B est, par exemple, adapté pour générer le signal de commande numérique S204 en fonction du courant et/ou de la tension transmis par : le premier amplificateur 280B, c'est-à-dire le capteur de température 248B, et/ou le deuxième amplificateur 282B, c'est-à-dire le capteur de luminosité 250B et/ou le capteur de présence 252B.

Le signal de paramétrage S201 dépend du signal de commande numérique S204 et est ainsi fonction d'au moins une donnée mesurée par l'un des capteurs de température 248B, luminosité 250B et présence 252B ou de l'identifiant ou des paramètres de configuration.

Le logiciel de génération 292B est propre à générer le signal de commande numérique S204 uniquement lorsque le bloc de mesure du courant 289B détecte le signal de commande en polarité inverse S202. Ainsi, le dispositif de transmission 220B est propre à transmettre le signal de paramétrage S201 uniquement lorsque le signal de commande en polarité inverse S202 est détecté.

Plus précisément, le logiciel de génération 292B est adapté pour générer le signal de commande numérique S204 sous la forme d'un message différent pour chaque donnée mesurée par les capteurs de température 248B, luminosité 250B et présence 252B ou paramètre de configuration ou identifiant. Ainsi le signal de commande numérique S204, correspond à une trame, codée sous la forme d'une tension appliquée au transistor T201B, différente pour chaque message. Chaque trame comprend un nombre total prédéterminé de bits avec, par exemple, 2 bits d'identification, situés à une position prédéterminée dans la trame et correspondant au type d'information transmis dans le message, et un nombre de bits de donnée prédéterminé. La valeur des bits d'identification dépend des différents types d'information transmis via le signal de paramétrage S204 et est différente si l'information transmise est relative à une donnée mesurée par le capteur de température 248B ou le capteur de luminosité 250B ou le capteur de présence 252B ou à l'identifiant ou à l'un des paramètres de configurations mémorisées par le logiciel de mémorisation 290B.

Le logiciel de génération 292B est ainsi adapté pour générer, à chaque détection du signal de commande en polarité inverse S202, le signal de commande numérique S204 sous la forme d'un message différent, dont les bits de donnée et d'identification dépendent du type d'information à transmettre vers l'organe de pilotage 218B.

Le logiciel de génération 292B génère par exemple successivement un premier message comprenant l'identifiant du module d'éclairage 210B, puis un deuxième message comprenant la luminosité mesurée par le capteur de luminosité 250B, puis un troisième message comprenant une donnée mesurée par le capteur de présence 252B, puis un quatrième message comprenant la température mesurée par le capteur de température 248B.

En variante, suite à la mise sous tension du dispositif de transmission 220B, le dispositif de transmission 220B transmet en priorité un cinquième message comprenant le ou les paramètres de configuration.

Avantageusement, chaque trame comprend par exemple 1 bit de démarrage, 2 bits d'identification, un nombre de bits de donnée prédéterminé, 1 bit de parité permettant de vérifier la validité de la trame, c'est à dire du message transmis et un bit de stop.

Le signal de paramétrage S201 est fonction de la trame générée par le logiciel de génération 292B et a, par exemple, une forme identique à celle de la trame générée et comprend donc notamment les bits d'identification et de donnée. Le signal de paramétrage S201 correspond, comme dans le premier mode de réalisation à un courant transmis vers l'organe de pilotage 218B.

L'organe de pilotage 218B et plus précisément le bloc de commande 242B sont adaptés pour récupérer le signal de paramétrage S201 grâce à l'organe de mesure du courant 244B. Le bloc de commande 242B est propre à identifier, via les bits d'identification, à quelle trame correspond le signal de paramétrage S201, c'est-à-dire à quel donnée mesurée ou paramètre de configuration ou identifiant correspond le signal de paramétrage S201. Le bloc de commande 242B est apte à récupérer les bits de données compris dans le signal de paramétrage S201, grâce à l'organe de mesure du courant 244B, afin de piloter la puissance électrique délivrée sur la liaison électrique 221B en fonction des bits de données.

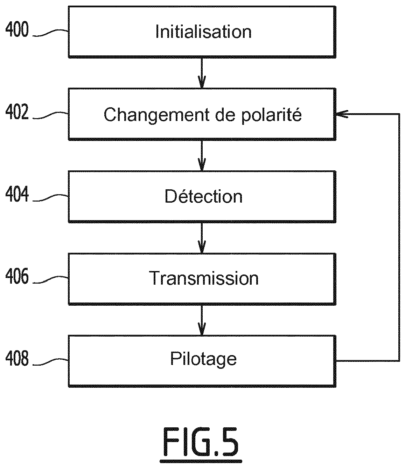

Le fonctionnement du deuxième mode de réalisation va désormais être présenté à l'aide du procédé de transmission correspondant à l'organigramme de la figure 5.

Lors d'une première étape d'initialisation 400 du module d'éclairage 210B, l'organe de pilotage 218B récupère et/ou découvre la polarité du module d'éclairage 210B.

Après l'étape d'initialisation 400, l'organe de pilotage 218B est adapté pour piloter le module d'éclairage 210B et notamment pour alimenter et allumer le module d'éclairage 210B lorsqu'un utilisateur le commande. L'organe de pilotage 218B transmet alors au module d'éclairage 210B le signal de commande en polarité directe S203. L'organe de stockage d'énergie électrique 228B stocke alors une partie de l'énergie électrique transmise sur la liaison électrique 221B et destinée à alimenter le module d'éclairage 210B.

Puis, suite à l'étape d'initialisation 400, lors d'une étape de changement de polarité 402, les moyens de changement de polarité génèrent le signal de commande en polarité inverse et changent la polarité du module d'éclairage 210B pendant la durée maximale.

Ensuite, lors d'une étape de détection 404, le premier commutateur détecte le signal de commande en polarité inverse puisque sa polarité est opposée à celle du module d'éclairage 210B et passe de sa position ouverte à sa position fermée. De même, le deuxième commutateur détecte le signal de commande en polarité inverse et passe de sa position fermée à sa position ouverte. L'organe de stockage d'énergie électrique 228B est alors isolé électriquement de la liaison électrique 221B et alimente électriquement le dispositif de transmission 220B. En outre, l'unité de traitement 284B détecte grâce au bloc de mesure du courant 289B le signal de commande en polarité inverse.

Suite à la détection du signal de commande en polarité inverse par l'unité de traitement 284B, lors d'une étape de transmission 406, le dispositif de transmission 220B récupère, par exemple, l'identifiant du module d'éclairage 210B. Puis, les moyens de transmission 225B transmettent le signal de paramétrage S201, ce qui correspond dans le cas de l'exemple précité, à la transmission du premier message par l'unité de traitement 284B vers le transistor T201B.

En variante, lors de l'étape de transmission 406, le deuxième, troisième, quatrième ou cinquième message est transmis par l'unité de traitement 284B.

Enfin, lors d'une étape de pilotage 408, suite à l'étape de transmission 406, l'organe de pilotage 218B et plus précisément les organes de mesure du courant 244B et de la tension 246B mesurent le courant et la tension sur la liaison électrique 221B. Le bloc de commande 242B, commande alors la puissance électrique délivrée sur la liaison électrique 221B en fonction du signal de paramétrage S201 transmis et donc nomment en fonction de la valeur du courant mesurée sur la liaison électrique 221B.

L'étape de changement de polarité 402 est alors répétée suivant la période prédéterminée, et lors des étapes de transmission 406, le signal de paramétrage S201 varie et correspond à la transmission successive du deuxième, du troisième, du quatrième et du cinquième messages par l'unité de traitement 284B.

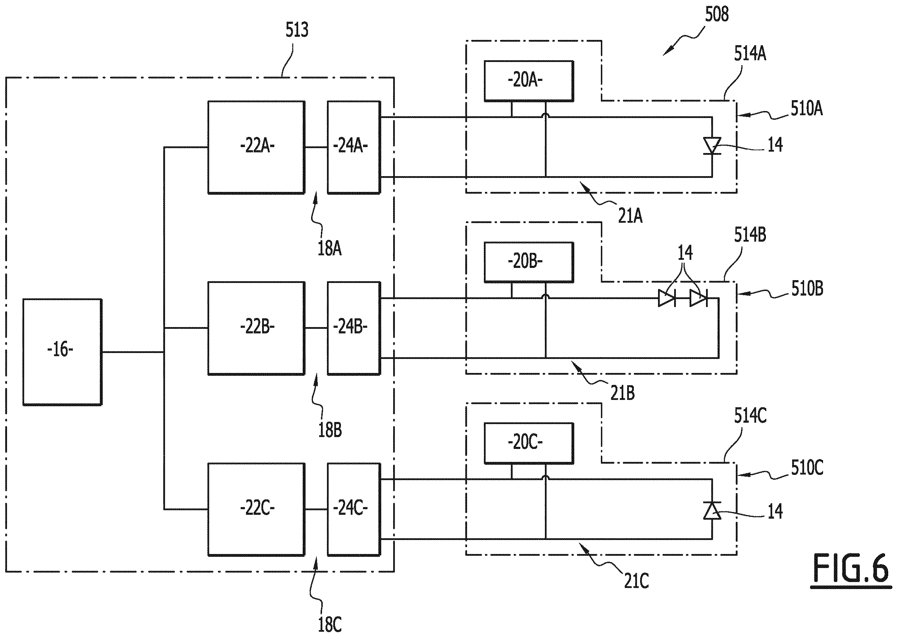

Dans un troisième mode de réalisation de l'invention, présenté à la figure 6, les éléments similaires à ceux du premier mode de réalisation ne sont pas décrits à nouveau et portent les mêmes références. Dans la suite, uniquement les différences entre le premier et le troisième modes de réalisation seront décrites.

Sur la figure 6, un ensemble 508 d'éclairage à diodes électroluminescentes est représenté. L'ensemble 508 comprend un premier 510A, un deuxième 510B et un troisième 510C modules d'éclairage à diodes électroluminescentes, ainsi qu'un bloc 513 d'alimentation électrique des modules d'éclairage 510A, 510B, 510C.

A la différence du premier mode de réalisation, chaque module d'éclairage 510A, 510B, 510C, comprend un boîtier de protection 514A, 514B, 514C à l'intérieur duquel sont disposés la ou les diodes électroluminescentes 14 et un dispositif 20A, 20B, 20C, de transmission d'un signal électrique de paramétrage S1 à un organe de pilotage 18A, 18B, 18C du module d'éclairage 510A, 510B, 510C.

En d'autres termes, chaque module d'éclairage 510A, 510B, 510C intègre un dispositif de transmission 20A, 20B, 20C correspondant.

Le bloc d'alimentation 513 comprend un organe d'alimentation 16 et les organes de pilotage 18A, 18B, 18C.

Le bloc d'alimentation 513 est propre à être relié électriquement aux modules d'éclairage 510A, 510B, 510C, c'est-à-dire aux dispositifs de transmission 20A, 20B, 20C et aux diodes 14 compris dans les modules d'éclairage 510A, 510B, 510C.

Le fonctionnement de l'ensemble d'éclairage 508 est similaire à celui du de l'ensemble d'éclairage 8 décrit à la figure 1.

De plus, dans le troisième mode de réalisation, les dispositifs de transmission 20A, 20B, 20C sont similaires aux dispositifs de transmission décrits dans le premier mode de réalisation de l'invention. En variante, dans le troisième mode de réalisation, les dispositifs de transmission sont similaires au dispositif de transmission 220B décrit dans le deuxième mode de réalisation de l'invention.

En variante, dans les différents modes de réalisation, un même organe de pilotage 18A, 18B, 18C, 218B est associé à plusieurs modules d'éclairage 10A, 10B, 10C, 210B.

Selon une autre variante, non représentée, dans les premier et deuxième modes de réalisation, chaque dispositif de transmission 20A, 20B, 20C, 220B est propre à être intégré dans un connecteur électrique qui est adapté pour être relié électriquement au module d'éclairage correspondant 10A, 10B, 10C, 220C

Selon une autre variante, un même dispositif de transmission 20A, 20B, 20C, 220B est associé à plusieurs modules d'éclairage 10A, 10B, 10C, 210B.

Grâce à l'invention, chaque dispositif de transmission 20A, 20B, 20C, 220B est propre à transmettre à l'organe de pilotage 18A, 18B, 18C, 218B correspondant des données mesurées par les capteurs 48B, 50B, 52B, 248B, 250B, 252B et/ou l'identifiant du module d'éclairage 10A, 10B, 10C, 210B et/ou des paramètres de configuration sans utiliser une liaison électrique dédiée. En effet, la transmission du signal de paramétrage S1, S201 se fait via la liaison électrique 21A, 21B, 21C, 221B, par laquelle l'organe de pilotage alimente électriquement le module d'éclairage 10A, 10B, 10C, 210B correspondant. Ainsi, l'architecture des liaisons électriques entre l'organe de pilotage 18B et le dispositif de transmission 20B est simplifiée.

En outre, la transmission du signal de paramétrage S1, S201 à l'organe de pilotage 18B, 218B est simplifiée et améliorée puisque le signal de paramétrage S1, S201 est transmis lorsque les moyens de changement 24B, 224B commandent le passage du module d'éclairage 20B, 210B en polarité inverse, c'est-à-dire vers sa polarité inverse.

Le système d'alimentation 12 est donc plus simple à mettre en oeuvre et lors de l'installation d'un tel système dans un bâtiment, la mise en place de la connexion entre les différents éléments du système d'alimentation 12 et le ou les modules d'éclairage est simplifiée.

Par ailleurs un tel système d'alimentation permet à l'organe de pilotage 18A, 18B, 18C, 218B de récupérer de nombreuses informations sur le ou les modules d'éclairage 10A, 10B, 10C, 210B au(x)quel(s) il est associé et sur l'environnement dans lequel les modules d'éclairage 10A, 10B, 10C, 210B se situent. La commande du module d'éclairage, notamment suivant des conditions environnementales dans lesquels il se trouve, est ainsi optimisée.

De plus, dans le deuxième mode de réalisation, l'organe de pilotage 218B est apte à récupérer l'identifiant du module d'éclairage 210B qu'il pilote et, avantageusement, les paramètres de configuration du module d'éclairage 210B, et ainsi à identifier le module d'éclairage et ses caractéristiques pour le piloter de façon optimale.

La durée maximale de passage du module d'éclairage en polarité inverse est assez courte pour permettre la transmission du signal de paramétrage S1, S201 sans qu'un opérateur perçoive une variation de la luminosité du module d'éclairage 10B, 210B.

Les modes de réalisation et variantes envisagés ci-dessus sont propres à être combinés entre eux suivant toutes les combinaisons techniquement admissibles.

En variante, suite à la mise sous tension du dispositif de transmission 220B, le dispositif de transmission 220B transmet en priorité un cinquième message comprenant le ou les paramètres de configuration.

Avantageusement, chaque trame comprend par exemple 1 bit de démarrage, 2 bits d'identification, un nombre de bits de donnée prédéterminé, 1 bit de parité permettant de vérifier la validité de la trame, c'est à dire du message transmis et un bit de stop.

Le signal de paramétrage S201 est fonction de la trame générée par le logiciel de génération 292B et a, par exemple, une forme identique à celle de la trame générée et comprend donc notamment les bits d'identification et de donnée. Le signal de paramétrage S201 correspond, comme dans le premier mode de réalisation à un courant transmis vers l'organe de pilotage 218B.

L'organe de pilotage 218B et plus précisément le bloc de commande 242B sont adaptés pour récupérer le signal de paramétrage S201 grâce à l'organe de mesure du courant 244B. Le bloc de commande 242B est propre à identifier, via les bits d'identification, à quelle trame correspond le signal de paramétrage S201, c'est-à-dire à quel donnée mesurée ou paramètre de configuration ou identifiant correspond le signal de paramétrage S201. Le bloc de commande 242B est apte à récupérer les bits de données compris dans le signal de paramétrage S201, grâce à l'organe de mesure du courant 244B, afin de piloter la puissance électrique délivrée sur la liaison électrique 221B en fonction des bits de données.

Le fonctionnement du deuxième mode de réalisation va désormais être présenté à l'aide du procédé de transmission correspondant à l'organigramme de la figure 5.

Lors d'une première étape d'initialisation 400 du module d'éclairage 210B, l'organe de pilotage 218B récupère et/ou découvre la polarité du module d'éclairage 210B.

Après l'étape d'initialisation 400, l'organe de pilotage 218B est adapté pour piloter le module d'éclairage 210B et notamment pour alimenter et allumer le module d'éclairage 210B lorsqu'un utilisateur le commande. L'organe de pilotage 218B transmet alors au module d'éclairage 210B le signal de commande en polarité directe S203. L'organe de stockage d'énergie électrique 228B stocke alors une partie de l'énergie électrique transmise sur la liaison électrique 221B et destinée à alimenter le module d'éclairage 210B.

Puis, suite à l'étape d'initialisation 400, lors d'une étape de changement de polarité 402, les moyens de changement de polarité génèrent le signal de commande en polarité inverse et changent la polarité du module d'éclairage 210B pendant la durée maximale.

Ensuite, lors d'une étape de détection 404, le premier commutateur détecte le signal de commande en polarité inverse puisque sa polarité est opposée à celle du module d'éclairage 210B et passe de sa position ouverte à sa position fermée. De même, le deuxième commutateur détecte le signal de commande en polarité inverse et passe de sa position fermée à sa position ouverte. L'organe de stockage d'énergie électrique 228B est alors isolé électriquement de la liaison électrique 221B et alimente électriquement le dispositif de transmission 220B. En outre, l'unité de traitement 284B détecte grâce au bloc de mesure du courant 289B le signal de commande en polarité inverse.

Suite à la détection du signal de commande en polarité inverse par l'unité de traitement 284B, lors d'une étape de transmission 406, le dispositif de transmission 220B récupère, par exemple, l'identifiant du module d'éclairage 210B. Puis, les moyens de transmission 225B transmettent le signal de paramétrage S201, ce qui correspond dans le cas de l'exemple précité, à la transmission du premier message par l'unité de traitement 284B vers le transistor T201B.

En variante, lors de l'étape de transmission 406, le deuxième, troisième, quatrième ou cinquième message est transmis par l'unité de traitement 284B.

Enfin, lors d'une étape de pilotage 408, suite à l'étape de transmission 406, l'organe de pilotage 218B et plus précisément les organes de mesure du courant 244B et de la tension 246B mesurent le courant et la tension sur la liaison électrique 221B. Le bloc de commande 242B, commande alors la puissance électrique délivrée sur la liaison électrique 221B en fonction du signal de paramétrage S201 transmis et donc nomment en fonction de la valeur du courant mesurée sur la liaison électrique 221B.

L'étape de changement de polarité 402 est alors répétée suivant la période prédéterminée, et lors des étapes de transmission 406, le signal de paramétrage S201 varie et correspond à la transmission successive du deuxième, du troisième, du quatrième et du cinquième messages par l'unité de traitement 284B.

Dans un troisième mode de réalisation de l'invention, présenté à la figure 6, les éléments similaires à ceux du premier mode de réalisation ne sont pas décrits à nouveau et portent les mêmes références. Dans la suite, uniquement les différences entre le premier et le troisième modes de réalisation seront décrites.

Sur la figure 6, un ensemble 508 d'éclairage à diodes électroluminescentes est représenté. L'ensemble 508 comprend un premier 510A, un deuxième 510B et un troisième 510C modules d'éclairage à diodes électroluminescentes, ainsi qu'un bloc 513 d'alimentation électrique des modules d'éclairage 510A, 510B, 510C.

A la différence du premier mode de réalisation, chaque module d'éclairage 510A, 510B, 510C, comprend un boîtier de protection 514A, 514B, 514C à l'intérieur duquel sont disposés la ou les diodes électroluminescentes 14 et un dispositif 20A, 20B, 20C, de transmission d'un signal électrique de paramétrage S1 à un organe de pilotage 18A, 18B, 18C du module d'éclairage 510A, 510B, 510C.

En d'autres termes, chaque module d'éclairage 510A, 510B, 510C intègre un dispositif de transmission 20A, 20B, 20C correspondant.

Le bloc d'alimentation 513 comprend un organe d'alimentation 16 et les organes de pilotage 18A, 18B, 18C.

Le bloc d'alimentation 513 est propre à être relié électriquement aux modules d'éclairage 510A, 510B, 510C, c'est-à-dire aux dispositifs de transmission 20A, 20B, 20C et aux diodes 14 compris dans les modules d'éclairage 510A, 510B, 510C.

Le fonctionnement de l'ensemble d'éclairage 508 est similaire à celui du de l'ensemble d'éclairage 8 décrit à la figure 1.

De plus, dans le troisième mode de réalisation, les dispositifs de transmission 20A, 20B, 20C sont similaires aux dispositifs de transmission décrits dans le premier mode de réalisation de l'invention. En variante, dans le troisième mode de réalisation, les dispositifs de transmission sont similaires au dispositif de transmission 220B décrit dans le deuxième mode de réalisation de l'invention.

En variante, dans les différents modes de réalisation, un même organe de pilotage 18A, 18B, 18C, 218B est associé à plusieurs modules d'éclairage 10A, 10B, 10C, 210B.

Selon une autre variante, non représentée, dans les premier et deuxième modes de réalisation, chaque dispositif de transmission 20A, 20B, 20C, 220B est propre à être intégré dans un connecteur électrique qui est adapté pour être relié électriquement au module d'éclairage correspondant 10A, 10B, 10C, 220C

Selon une autre variante, un même dispositif de transmission 20A, 20B, 20C, 220B est associé à plusieurs modules d'éclairage 10A, 10B, 10C, 210B.

Grâce à l'invention, chaque dispositif de transmission 20A, 20B, 20C, 220B est propre à transmettre à l'organe de pilotage 18A, 18B, 18C, 218B correspondant des données mesurées par les capteurs 48B, 50B, 52B, 248B, 250B, 252B et/ou l'identifiant du module d'éclairage 10A, 10B, 10C, 210B et/ou des paramètres de configuration sans utiliser une liaison électrique dédiée. En effet, la transmission du signal de paramétrage S1, S201 se fait via la liaison électrique 21A, 21B, 21C, 221B, par laquelle l'organe de pilotage alimente électriquement le module d'éclairage 10A, 10B, 10C, 210B correspondant. Ainsi, l'architecture des liaisons électriques entre l'organe de pilotage 18B et le dispositif de transmission 20B est simplifiée.

En outre, la transmission du signal de paramétrage S1, S201 à l'organe de pilotage 18B, 218B est simplifiée et améliorée puisque le signal de paramétrage S1, S201 est transmis lorsque les moyens de changement 24B, 224B commandent le passage du module d'éclairage 20B, 210B en polarité inverse, c'est-à-dire vers sa polarité inverse.

Le système d'alimentation 12 est donc plus simple à mettre en oeuvre et lors de l'installation d'un tel système dans un bâtiment, la mise en place de la connexion entre les différents éléments du système d'alimentation 12 et le ou les modules d'éclairage est simplifiée.

Par ailleurs un tel système d'alimentation permet à l'organe de pilotage 18A, 18B, 18C, 218B de récupérer de nombreuses informations sur le ou les modules d'éclairage 10A, 10B, 10C, 210B au(x)quel(s) il est associé et sur l'environnement dans lequel les modules d'éclairage 10A, 10B, 10C, 210B se situent. La commande du module d'éclairage, notamment suivant des conditions environnementales dans lesquels il se trouve, est ainsi optimisée.

De plus, dans le deuxième mode de réalisation, l'organe de pilotage 218B est apte à récupérer l'identifiant du module d'éclairage 210B qu'il pilote et, avantageusement, les paramètres de configuration du module d'éclairage 210B, et ainsi à identifier le module d'éclairage et ses caractéristiques pour le piloter de façon optimale.

La durée maximale de passage du module d'éclairage en polarité inverse est assez courte pour permettre la transmission du signal de paramétrage S1, S201 sans qu'un opérateur perçoive une variation de la luminosité du module d'éclairage 10B, 210B.

Les modes de réalisation et variantes envisagés ci-dessus sont propres à être combinés entre eux suivant toutes les combinaisons techniquement admissibles.

## Revendications

1. Système d'alimentation (12) d'un ou plusieurs modules d'éclairage (10A, 10B, 10C ; 210B) à diodes électroluminescentes (14 ; 214), chaque module d'éclairage (10A, 10B, 10C ; 210B) comprenant au moins une diode électroluminescente (14 ; 214) et étant propre à être polarisé selon une polarité directe ou selon une polarité inverse, la ou les diodes électroluminescentes (14 ; 214) étant polarisées en direct, pour la polarité directe du module d'éclairage (10A, 10B, 10C ; 210B) et respectivement en inverse, pour la polarité inverse du module d'éclairage (10A, 10B, 10C ; 210B), le système d'alimentation comportant :
- au moins un organe (18A, 18B, 18C ; 218B) de pilotage du ou d'un module correspondant des modules d'éclairage (10A, 10B, 10C; 210B), chaque organe de pilotage (18A, 18B, 18C ; 218B) étant propre à être relié à un module d'éclairage (10A, 10B, 10C ; 210B) correspondant via une liaison électrique filaire (21A, 21B, 21C ; 221B) respective du système d'alimentation et à alimenter électriquement le module d'éclairage (10A, 10B, 10C ; 210B) correspondant par ladite liaison électrique filaire (21A, 21B, 21C ; 221B) respective; chaque organe de pilotage (18A, 18B, 18C; 218B) comprenant des moyens (24A, 24B, 24C ; 224B) de changement de la polarité dudit module d'éclairage (10A, 10B, 10C ; 210B), les moyens de changement de la polarité du module d'éclairage étant propres à générer un signal de commande en polarité inverse (S2 ; S202) dudit module d'éclairage (10A, 10B, 10C ; 210B) et à commander ledit module d'éclairage en polarité inverse,
- un organe (16) d'alimentation électrique du ou d'un module correspondant des modules d'éclairage (10A, 10B, 10C ; 210B), l'organe d'alimentation étant relié électriquement à le ou chaque organe de pilotage (18A, 18B, 18C ; 218B), et
- au moins un dispositif de transmission (20A, 20B, 20C ; 220B) d'un signal électrique de paramétrage (S1 ; S201), chaque dispositif de transmission (20A, 20B, 20C ; 220B) d'un signal électrique de paramétrage (S1 ; S201) étant associé à un organe de pilotage (18A, 18B, 18C ; 218B) respectif et étant connecté à la liaison électrique filaire (21A, 21B, 21C ; 221B) respective entre l'organe de pilotage (18A, 18B, 18C ; 218B) associé et le module d'éclairage (10A, 10B, 10C ; 210B) correspondant, chaque dispositif de transmission (20A, 20B, 20C, 220B) comprenant des premiers moyens (26B, 30B ; 226B, 230B, 289B) de détection du signal respectif (S2 ; S202) de commande du passage du module d'éclairage (10A, 10B, 10C ; 210B) correspondant en polarité inverse et des moyens de transmission (25B, 225B) du signal électrique de paramétrage (S1, S201) à l'organe de pilotage (18A, 18B, 18C ; 218B) associé, les moyens de transmission (25B, 225B) étant adaptés pour transmettre le signal électrique de paramétrage (S1 ; S201) à l'organe de pilotage (18A, 18B, 18C ; 218B) correspondant, suite à la détection du signal respectif de commande en polarité inverse (S2 ; S202), le système d'alimentation (12) étant
**caractérisé en ce que** les moyens de changement (24A, 24B, 24C ; 224B) de la polarité de chaque organe de pilotage (18A, 18B, 18C, 218B) sont propres à commander le module d'éclairage (10A, 10B, 10C ; 210B) correspondant en polarité inverse avec une périodicité prédéterminée.

2. Système d'alimentation (12) selon la revendication 1, dans lequel, pour chaque dispositif de transmission (20A, 20B, 20C ; 220B), les premiers moyens de détection (289B) comprennent un premier organe (289B) de mesure de l'intensité du courant sur la liaison électrique filaire (221B) respective, les premiers moyens de détection (289B) étant propres à détecter le signal respectif de commande en polarité inverse (S202) lorsque l'intensité du courant mesurée est nulle.

3. Système d'alimentation (12) selon la revendication 1 ou 2, dans lequel, pour chaque dispositif de transmission (20A, 20B, 20C ; 220B), les premiers moyens de détection (26B, 30B ; 226B, 230B, 289B) comprennent un premier commutateur (26B; 226B) propre à commuter entre une position ouverte, dans laquelle les moyens de transmission (25B ; 225B) dudit dispositif de transmission (20A, 20B, 20C ; 220B) et la liaison électrique filaire (21A, 21B, 21C ; 221B) respective sont isolés électriquement l'un de l'autre, et une position fermée, dans laquelle les moyens de transmission (25B ; 225B) dudit dispositif de transmission (20A, 20B, 20C ; 220B) et la liaison électrique filaire (21A, 21B, 21C; 221B) respective sont reliés électriquement l'un à l'autre, le premier commutateur (26B ; 226B) étant configuré pour commuter vers sa position fermée suite à la détection du signal respectif de commande en polarité inverse (S2 ; S202).

4. Système d'alimentation (12) selon la revendication 3, dans lequel chaque dispositif de transmission (20A, 20B, 20C ; 220B) comprend des deuxièmes moyens de détection (26B, 30B ; 226B, 230B, 289B) d'un signal respectif de commande (S3 ; S203) du passage du module d'éclairage (10A, 10B, 10C ; 210B) respectif en polarité directe, le signal de commande en polarité directe (S3 ; S203) étant généré par les moyens de changement (24A, 24B, 24C ; 224B) respectifs, et dans lequel le premier commutateur (26B ; 226B) respectif est configuré pour commuter vers sa position ouverte suite à la détection du signal de commande respectif en polarité directe (S3 ; S203).

5. Système d'alimentation (12) selon la revendication 4, dans lequel chaque dispositif de transmission comprend un organe de stockage d'énergie (28B ; 228B) et un deuxième commutateur (30B ; 230B) propre à commuter entre une position fermée, dans laquelle l'organe de stockage d'énergie (28B ; 228B) est relié électriquement à la liaison électrique filaire (21B ; 221B) respective et stocke au moins une partie de l'énergie électrique transmise sur la liaison électrique filaire (21B ; 221B) respective et une position ouverte, dans laquelle l'organe de stockage d'énergie (28B ; 228B) est isolé électriquement de la liaison électrique filaire (21B; 221B) respective, le deuxième commutateur (30B ; 230B) étant configuré pour commuter vers sa position ouverte, suite à la détection du signal respectif de commande er polarité inverse (S2 ; S202) et vers sa position fermée suite à la détection du signal respectif de commande en polarité directe (S3 ; S203).

6. Système d'alimentation (12) selon l'une des revendications précédentes, dans lequel chaque dispositif de transmission comprend des moyens (48B, 50B, 52B ; 248B, 250B, 252B, 290B) de récupération de paramètres associés au module d'éclairage respectif et/ou à un environnement dans lequel ledit module d'éclairage est installé et des moyens de modification (54B ; 254B) de l'amplitude et/ou de la forme du signal électrique de paramétrage (S1 ; S201) transmis sur la liaison électrique filaire (21B ; 221B) respective en fonction du ou des paramètres récupérés par les moyens de récupération (48B, 50B, 52B ; 248B, 250B, 252B, 290B).

7. Système d'alimentation (12) selon l'une des revendications 3 à 5, dans lequel, pour chaque dispositif de transmission (20A, 20B, 20C ; 220B), les moyens de transmission (25B ; 225B) sont propres à transmettre un courant sur la liaison électrique filaire (21B; 221B) respective lorsque le premier commutateur (26B ; 226B) est en position fermée, le courant transmis correspondant au signal de paramétrage (S1 ; S201).

8. Système d'alimentation (12) selon la revendication 4 ou 5, dans lequel chaque liaison électrique filaire (21A, 21B, 21C ; 221B) est adaptée pour transmettre à la fois le signal de commande en polarité inverse (S2 ; S202), le signal de commande en polarité directe (S3 ; S203) et le signal électrique de paramétrage (S1 ; S201) et comprend uniquement un premier conducteur (34B ; 234B) et un deuxième (36B ; 236B) conducteur.

9. Système d'alimentation (12) selon la revendication 8, dans lequel chaque organe de pilotage (18A, 18B, 18C ; 218B) est adapté pour piloter une puissance électrique délivrée au module d'éclairage (10A, 10B, 10C ; 210B) correspondant via la liaison électrique filaire (21A, 21B, 21C ; 221B) respective, en fonction de l'amplitude et/ou de la forme du signal électrique de paramétrage (S1 ; S201) qui lui est transmis.

10. Système d'alimentation (12) selon la revendication 3 ou 4, dans lequel pour chaque dispositif de transmission (20A, 20B, 20C ; 220B), le premier commutateur (26B ; 226B) est en forme d'une diode de polarité opposée à celle d'un module d'éclairage correspondant (10A, 10B, 10C ; 210B).

11. Système d'alimentation (12) selon l'une des revendications précédentes, dans lequel les moyens de changement de la polarité (24A, 24B, 24C ; 224B) sont adaptés pour commander le ou les modules d'éclairage (10A, 10B, 10C ; 210B) en polarité inverse pendant une durée maximale prédéterminée de valeur inférieure à 100 ms, de préférence inférieure à 10ms.

12. Ensemble (10) d'éclairage à diodes électroluminescentes comportant :
- un ou plusieurs modules d'éclairage (10A, 10B, 10C ; 210B) à diodes électroluminescentes (14 ; 214), chaque module d'éclairage (10A, 10B, 10C ; 210B) comprenant au moins une diode électroluminescente (14 ; 214) et étant propre à être polarisé selon une polarité directe ou selon une polarité inverse et la ou les diodes électroluminescentes (14 ; 214) étant polarisées en direct, pour la polarité directe du module d'éclairage (10A, 10B, 10C ; 210B) et respectivement en inverse, pour la polarité inverse du module d'éclairage (10A, 10B, 10C ; 210B), et
- un système d'alimentation (12) du ou des modules d'éclairage,
**caractérisé en ce que** le système d'alimentation (12) est conforme à l'une des revendications précédentes.

## Patentansprüche

1. Stromversorgungssystem (12) eines oder mehrerer Beleuchtungsmodule (10A, 10B, 10C; 210B) mit Leuchtdioden (14; 214), jedes Beleuchtungsmodul (10A, 10B, 10C; 210B) umfassend mindestens eine Leuchtdiode (14; 214) und ist geeignet, gemäß einer direkten Polarität oder gemäß einer inversen Polarität gepolt zu werden, wobei die Leuchtdiode(n) (14; 214) für die direkte Polarität des Beleuchtungsmoduls (10A, 10B, 10C; 210B) direkt und für die inverse Polarität des Beleuchtungsmoduls (10A, 10B, 10C; 210B) invers gepolt sind, das Stromversorgungssystem umfassend:
- mindestens ein Element (18A, 18B, 18C; 218B) zur Steuerung des oder eines jeweiligen der Beleuchtungsmodule (10A, 10B, 10C; 210B), wobei jedes Steuerelement (18A, 18B, 18C; 218B) geeignet ist, um über eine jeweilige elektrische Drahtverbindung (21A, 21B, 21C; 221B) des Stromversorgungssystems mit einem jeweiligen Beleuchtungsmodul (10A, 10B, 10C; 210B) verbunden zu werden und das jeweilige Beleuchtungsmodul (10A, 10B, 10C; 221B) über die jeweilige elektrische Drahtverbindung (21A, 21B, 21C; 221B) elektrisch zu versorgen; jedes Steuerelement (18A, 18B, 18C; 218B) umfassend Einrichtungen (24A, 24B, 24C; 224B) zum Ändern der Polarität des Beleuchtungsmoduls (10A, 10B, 10C; 210B), wobei die Einrichtungen zum Ändern der Polarität des Beleuchtungsmoduls geeignet sind, um ein Steuersignal umgekehrter Polarität (S2; S202) des Beleuchtungsmoduls (10A, 10B, 10C; 210B) zu erzeugen und um das Beleuchtungsmodul mit umgekehrter Polarität zu steuern,
- ein Element (16) zur Stromversorgung des oder eines jeweiligen der Beleuchtungsmodule (10A; 10B, 10C; 210B), wobei das Versorgungselement elektrisch mit dem oder jedem Steuerelement (18A, 18B, 18C; 218B) verbunden ist, und
- mindestens eine Übertragungsvorrichtung (20A, 20B, 20C; 220B) eines elektrischen Parametrierungssignals (S1; S201), wobei jede Übertragungsvorrichtung (20A, 20B, 20C; 220B) eines elektrischen Parametrierungssignals (S1; S201) mit einem Steuerelement (18A, 18B, 18C; 218B) assoziiert ist und mit der jeweiligen elektrischen Drahtverbindung (21A, 21B, 21C; 221B) zwischen dem assoziierten Steuerelement (18A, 18B, 18C; 218B) und dem jeweiligen Beleuchtungsmodul (10A, 10B, 10C; 210B) verbunden ist, jede Übertragungsvorrichtung (20A, 20B, 20C, 220B) umfassend erste Einrichtungen (26B, 30B; 226B, 230B, 289B) zur Erfassung des jeweiligen Signals (S2; S202) zur Steuerung des Durchgangs des jeweiligen Beleuchtungsmoduls (10A, 10B, 10C; 210B), jede Übertragungsvorrichtung (20A, 20B, 20C, 220B) umfassend erste Einrichtungen (26B, 30B; 226B, 230B, 289B) zur Erfassung des jeweiligen Signals (S2; S202) zur Steuerung des Durchgangs des jeweiligen Beleuchtungsmoduls (10A, 10B, 10C; 210B) auf umgekehrte Polarität und Übertragungseinrichtungen (25B, 225B) des elektrischen Parametrierungssignals (S1, S201) an das jeweilige Steuerelement (18A, 18B, 18C; 218B) nach Erfassen des jeweiligen Signals zur Steuerung auf umgekehrte Polarität (S2; S202),
wobei das Stromversorgungssystem (12) **dadurch gekennzeichnet ist, dass** die Einrichtungen (24A, 24B, 24C; 224B) zum Ändern der Polarität von jedem Steuerelement (18A, 18B, 18C, 218B) geeignet sind, um das jeweilige Beleuchtungsmodul (10A, 10B, 10C; 210B)
mit einer vorbestimmten Periodizität auf umgekehrte Polarität zu steuern.

2. Stromversorgungssystem (12) nach Anspruch 1, wobei, für jede Übertragungsvorrichtung (20A, 20B, 20C; 220B), die ersten Erfassungseinrichtungen (289B) umfassend ein erstes Element (289B) zum Messen der Stärke des Stroms auf der jeweiligen drahtgebundenen elektrischen Verbindung (221B), wobei die ersten Erfassungseinrichtungen (289B) geeignet sind, um das jeweilige Steuersignal mit umgekehrter Polarität (S202) zu erfassen, wenn die gemessene Stärke des Stroms Null ist.

3. Stromversorgungssystem (12) nach Anspruch 1 oder 2, wobei, für jede Übertragungsvorrichtung (20A, 20B, 20C; 220B), die ersten Erfassungseinrichtungen (26B, 30B; 226B, 230B, 289B) einen ersten Schalter (26B; 226B) umfassen, der geeignet ist, um zwischen einer offenen Position, in der die Übertragungseinrichtungen (25B; 225B) der Übertragungsvorrichtung (20A, 20B, 20C; 220B) und die jeweilige elektrische Drahtverbindung (21A, 21B, 21C; 221B) elektrisch voneinander isoliert sind, und einer geschlossenen Position, in der die Übertragungseinrichtungen (25B; 225B) der Übertragungsvorrichtung (20A, 20B, 20C; 220B) und die jeweilige elektrische Drahtverbindung (21A, 21B; 21C; 221B) elektrisch miteinander verbunden sind, zu schalten, wobei der erste Schalter (26B; 226B) konfiguriert ist, um nach Erfassen des jeweiligen Steuersignals mit umgekehrter Polarität (S2; S202) in seine geschlossene Position umzuschalten.

4. Stromversorgungssystem (12) nach Anspruch 3, wobei jede Übertragungsvorrichtung (20A, 20B, 20C; 220B) zweite Erfassungseinrichtungen (26B, 30B; 226B, 230B, 289B) eines jeweiligen Steuersignals (S3; S203) für den Übergang des jeweiligen Beleuchtungsmoduls (10A, 10B, 10C; 210B) auf direkte Polarität umfasst, wobei das Steuersignal mit direkter Polarität (S3; S203) durch die jeweiligen Änderungseinrichtungen (24A, 24B, 24C; 224B) erzeugt wird, und wobei der jeweilige erste Schalter (26B; 226B) konfiguriert ist, um nach Erfassen des jeweiligen Steuersignals mit direkter Polarität (S3; S203) in seine offene Position umzuschalten.

5. Stromversorgungssystem (12) nach Anspruch 4, wobei jede Übertragungsvorrichtung ein Energiespeicherelement (28B; 228B) und einen zweiten Schalter (30B; 230B) umfasst, der geeignet ist, um zwischen einer geschlossenen Position, in der das Energiespeicherelement (28B; 228B) elektrisch mit der jeweiligen elektrischen Drahtverbindung (21B; 221B) verbunden ist und zumindest einen Teil der über die jeweilige elektrische Drahtverbindung (21B; 221B) übertragenen elektrischen Energie speichert, und einer offenen Position, in der das Energiespeicherelement (28B; 228B) elektrisch von der jeweiligen elektrischen Drahtverbindung (21B; 221B) isoliert ist, umzuschalten, wobei der zweite Schalter (30B; 230B) konfiguriert ist, um nach Erfassen des jeweiligen Steuersignals mit umgekehrter Polarität (S2; S202) in seine offene Position umzuschalten und nach Erfassen des jeweiligen Steuersignals mit direkter Polarität (S3; S203) in seine geschlossene Position umzuschalten.

6. Stromversorgungssystem (12) nach einem der vorherigen Ansprüche, wobei jede Übertragungsvorrichtung Einrichtungen (48B, 50B, 52B; 248B, 250B, 252B, 290B) zum Wiedererlangen von Parametern, die mit dem jeweiligen Beleuchtungsmodul und/oder einer Umgebung, in der das Beleuchtungsmodul installiert ist, assoziiert sind, und Modifizierungseinrichtungen (54B; 254B) der Amplitude und/oder der Form des elektrischen Parametersignals (S1; S201), das auf der jeweiligen drahtgebundenen elektrischen Verbindung (21B; 221B) übertragen wird, abhängig von dem oder den Parametern, die durch die Wiederherstellungsmittel (48B, 50B, 52B; 248B, 250B, 252B, 290B) wiedererlangt werden, umfasst.

7. Stromversorgungssystem (12) nach einem der Ansprüche 3 bis 5, wobei, für Übertragungsvorrichtung (20A, 20B, 20C; 220B), die Übertragungseinrichtungen (25B; 225B) geeignet sind, einen Strom auf der jeweiligen drahtgebundenen elektrischen Verbindung (21B; 221B) zu übertragen, wenn der erste Schalter (26B; 226B) in der geschlossenen Position ist, wobei der übertragene Strom dem Parametrierungssignal (S1; S201) entspricht.

8. Stromversorgungssystem (12) nach Anspruch 4 oder 5, wobei jede elektrische Drahtverbindung (21A, 21B, 21C; 221B) angepasst ist, um sowohl das Steuersignal mit umgekehrter Polarität (S2; S202), das Steuersignal mit direkter Polarität (S3; S203) als auch das elektrische Parametrierungssignal (S1; S201) zu übertragen, und nur einen ersten Leiter (34B; 234B) und einen zweiten Leiter (36B; 236B) umfasst.

9. Stromversorgungssystem (12) nach Anspruch 8, wobei jedes Steuerelement (18A, 18B, 18C; 218B) dazu angepasst ist, um eine elektrische Leistung, die dem jeweiligen Beleuchtungsmodul (10A, 10B, 10C; 210B) über die jeweilige elektrische Drahtverbindung (21A, 21B, 21C; 221B) zugeführt wird, abhängig von der Größe und/oder der Form des an ihn übertragenen elektrischen Parametrierungssignals (S1; S201) zu steuern.

10. Stromversorgungssystem (12) nach Anspruch 3 oder 4, wobei, für jede Übertragungsvorrichtung (20A, 20B, 20C; 220B), der erste Schalter (26B; 226B) in Form einer Diode mit entgegengesetzter Polarität zu einem jeweiligen Beleuchtungsmodul (10A, 10B, 10C; 210B) ist.

11. Stromversorgungssystem (12) nach einem der vorherigen Ansprüche, wobei die Änderungseinrichtungen der Polarität (24A, 24B, 24C; 224B) angepasst sind, um das oder die Beleuchtungsmodule (10A, 10B, 10C; 210B) über eine vorbestimmte maximale Dauer mit einem Wert von weniger als 100 ms, vorzugsweise weniger als 10 ms, mit umgekehrter Polarität zu steuern.

12. Beleuchtungsanordnung (10) mit Leuchtdioden, umfassend:
- ein oder mehrere Beleuchtungsmodule (10A, 10B, 10C; 210B) mit Leuchtdioden (14; 214), jedes Beleuchtungsmodul (10A, 10B, 10C; 210B) umfassend mindestens eine Leuchtdiode (14; 214) und ist geeignet, gemäß einer direkten Polarität oder gemäß einer inversen Polarität gepolt zu werden, und wobei die Leuchtdiode(n) (14; 214) für die direkte Polarität des Beleuchtungsmoduls (10A, 10B, 10C; 210B) direkt und für die inverse Polarität des Beleuchtungsmoduls (10A, 10B, 10C; 210B) invers gepolt sind, und
- ein Stromversorgungssystem (12) der oder der Beleuchtungsmodule, **dadurch gekennzeichnet, dass** das Stromversorgungssystem (12) einem der vorherigen Ansprüche entspricht.

## Claims

1. A power supply system (12) for one or more light-emitting diode (14; 214) lighting modules (10A, 10B, 10C; 210B), each lighting module (10A, 10B, 10C; 210B) comprising at least one light-emitting diode (14; 214) and can be biased to a forward or reverse polarity, the light-emitting diode(s) (14; 214) being forward-biased for the forward polarity of the lighting module (10A, 10B, 10C; 210B) and respectively reverse-biased for the reverse polarity of the lighting module (10A, 10B, 10C; 210B), the power supply system comprising:
- at least one member (18A, 18B, 18C; 218B) for controlling the or a corresponding one of the lighting modules (10A, 10B, 10C; 210B), each control member (18A, 18B, 18C; 218B) being suitable for being connected to a corresponding lighting module (10A, 10B, 10C; 210B) via a respective wired electrical connection (21A, 21B, 21C; 221B) of the power supply system and for supplying electrical power to the corresponding lighting module (10A, 10B, 10C; 210B) via said respective wired electrical link (21A, 21B, 21C; 221B); each control member (18A, 18B, 18C; 218B) comprising means (24A, 24B, 24C; 224B) for changing the polarity of said lighting module (10A, 10B, 10C; 210B), the means for changing the polarity of the lighting module being adapted to generate a reverse polarity command signal (S2; S202) for said lighting module (10A, 10B, 10C; 210B) and to command said lighting module to switch to reverse polarity,
- a power supply unit (16) for the or a corresponding one of the lighting modules (10A; 10B, 10C; 210B), the power supply unit being electrically connected to the or each control unit (18A, 18B, 18C; 218B), and
- at least one device (20A, 20B, 20C; 220B) for transmitting an electrical parameter-setting signal (S1; S201), each device (20A, 20B, 20C; 220B) for transmitting an electrical parameter-setting signal (S1; S201) being associated with a respective control member (18A, 18B, 18C; 218B) and being connected to the respective wired electrical connection (21A, 21B, 21C; 221B) between the associated control member (18A, 18B, 18C; 218B) and the corresponding lighting module (10A, 10B, 10C; 210B), each transmission device (20A, 20B, 20C, 220B) comprising first means (26B, 30B, 226B, 230B, 289B) for detecting the respective command signal (S2; S202) for switching the corresponding lighting module (10A, 10B, 10C; 210B), each transmission device (20A, 20B, 20C, 220B) comprising first means (26B, 30B; 226B, 230B, 289B) for detecting the respective signal (S2; S202) to command the switching of the corresponding lighting module (10A, 10B, 10C; 210B) to reverse polarity and means (25B, 225B) for transmitting the electrical parameter-setting signal (S1, S201) to the corresponding control member (18A, 18B, 18C; 218B), following the detection of the respective command signal to switch to reverse polarity (S2; S202),
the power supply system (12) being **characterised in that** the polarity changing means (24A, 24B, 24C; 224B) of each control member (18A, 18B, 18C, 218B) are adapted to command the lighting module (10A, 10B, 10C; 210B)
corresponding in reverse polarity with a predetermined periodicity.

2. The power supply system (12) according to claim 1, wherein for each transmission device (20A, 20B, 20C; 220B) the first detection means (289B) comprises a first member (289B) for measuring the current on the respective wired electrical connection (221 B), the first detection means (289B) being adapted to detect the respective reverse polarity command signal (S202) when the measured current is zero.

3. The power supply system (12) according to claim 1 or 2, wherein for each transmission device (20A, 20B, 20C; 220B) the first detection means (26B, 30B; 226B, 230B, 289B) comprises a first switch (26B; 226B) adapted to switch between an open position, in which the transmission means (25B; 225B) of said transmission device (20A, 20B, 20C; 220B) and the respective wired electrical connection (21A, 21B, 21C; 221B) are electrically isolated from each other, and a closed position, in which the transmission means (25B; 225B) of said transmission device (20A, 20B, 20C; 220B) and the respective wired electrical connection (21A, 21B; 21C; 221B) are electrically connected to each other, the first switch (26B; 226B) being configured to switch to its closed position upon detection of the respective reverse polarity command signal (S2; S202).

4. The power supply system (12) according to claim 3, wherein each transmission device (20A, 20B, 20C; 220B) comprises second means for detecting (26B, 30B; 226B, 230B, 289B) a respective command signal (S3; S203) for switching the respective lighting module (10A, 10B, 10C; 210B) to forward polarity, the forward polarity command signal (S3; S203) being generated by the respective changing means (24A, 24B, 24C; 224B), and wherein the respective first switch (26B; 226B) is configured to switch to its open position upon detection of the respective forward polarity command signal (S3; S203).

5. The power supply system (12) according to claim 4, wherein each transmission device comprises an energy storage member (28B; 228B) and a second switch (30B; 230B) adapted to switch between a closed position, in which the energy storage member (28B; 228B) is electrically connected to the respective wired electrical connection (21B; 221B) and stores at least a portion of the electrical energy transmitted over the wired electrical connection (21B; 221B) and an open position, in which the energy storage member (28B; 228B) is electrically isolated from the respective wired electrical connection (21B; 221B), the second switch (30B; 230B) being configured to switch to its open position upon detection of the respective reverse polarity command signal (S2; S202) and to its closed position upon detection of the respective forward polarity command signal (S3; S203).

6. The power supply system (12) according to any of the preceding claims, wherein each transmission device comprises means (48B, 50B, 52B; 248B, 250B, 252B, 290B) for retrieving parameters associated with the respective lighting module and/or an environment in which said lighting module is installed and means for modifying (54B; 254B) the amplitude and/or shape of the electrical parameter-setting signal (S1; S201) transmitted over the respective wired electrical link (21B; 221B) in accordance with the parameter(s) retrieved by the retrieval means (48B, 50B, 52B; 248B, 250B, 252B, 290B).

7. The power supply system (12) according to any one of claims 3 to 5, wherein, for a transmission device (20A, 20B, 20C; 220B), the transmission means (25B; 225B) are adapted to transmit a current on the respective wired electrical link (21B; 221B) when the first switch (26B; 226B) is in the closed position, the transmitted current corresponding to the parameter-setting signal (S1; S201).

8. The power supply system (12) according to claim 4 or 5, wherein each wired electrical link (21A, 21B, 21C; 221B) is adapted to transmit the reverse polarity command signal (S2; S202), the forward polarity command signal (S3; S203) and the electrical setting signal (S1; S201) all at once, and comprises only a first conductor (34B; 234B) and a second conductor (36B; 236B).

9. The power supply system (12) according to claim 8, wherein each control member (18A, 18B, 18C; 218B) is adapted to control an electrical power supplied to the corresponding lighting module (10A, 10B, 10C; 210B) via the respective wired electrical link (21A, 21B, 21C; 221B), dependent on the amplitude and/or shape of the electrical parameter-setting signal (S1; S201) transmitted thereto.

10. The power supply system (12) according to claim 3 or 4, wherein for each transmission device (20A, 20B, 20C; 220B) the first switch (26B; 226B) is in the form of a diode of opposite polarity to that of a corresponding lighting module (10A, 10B, 10C; 210B).

11. The power supply system (12) according to any of the preceding claims, wherein the polarity changing means (24A, 24B, 24C; 224B) are adapted to command the lighting module(s) (10A, 10B, 10C; 210B) to switch to reverse polarity for a predetermined maximum time of less than 100 ms, preferably less than 10 ms.

12. A light-emitting diode lighting assembly (10) comprising:
- one or more light-emitting diode (14; 214) lighting modules (10A, 10B, 10C; 210B), each lighting module (10A, 10B, 10C; 210B) comprising at least one light-emitting diode (14; 214) and can be biased to a forward or reverse polarity, and the light-emitting diode(s) (14; 214) being forward-biased for the forward polarity of the lighting module (10A, 10B, 10C; 210B) and respectively reverse-biased for the reverse polarity of the lighting module (10A, 10B, 10C; 210B), and
- a power supply system (12) for the light module(s), **characterised in that** the power supply system (12) is in accordance with one of the preceding claims.
